(19) Europäisches Patentamt
European Patent Office
Office européen des brevets

(11) **EP 3 654 089 A1**

(12) **EUROPEAN PATENT APPLICATION**
published in accordance with Art. 153(4) EPC

(43) Date of publication:
**20.05.2020 Bulletin 2020/21**

(51) Int Cl.:
***G02F 1/1335*** *(2006.01)*

(21) Application number: **18832292.9**

(22) Date of filing: **16.07.2018**

(86) International application number:
**PCT/KR2018/008021**

(87) International publication number:
**WO 2019/013604 (17.01.2019 Gazette 2019/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2017 KR 20170089485**

(71) Applicant: **LG Chem, Ltd.**
**Seoul 07336 (KR)**

(72) Inventors:
• **KIM, Gae Sung**
**Daejeon 34122 (KR)**
• **LEE, Eung Ki**
**Daejeon 34122 (KR)**
• **KIM, Young Gon**
**Daejeon 34122 (KR)**
• **LEE, Hyun Soo**
**Daejeon 34122 (KR)**
• **KIM, Yoo Bin**
**Daejeon 34122 (KR)**
• **KIM, Keon Woo**
**Daejeon 34122 (KR)**
• **KIM, Young Tae**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **LIQUID CRYSTAL PANEL AND METHOD FOR MANUFACTURING SAME**

(57) The present invention relates to a liquid crystal panel and a method for manufacturing the same, and according to one aspect of the present invention, there is provided a liquid crystal panel comprising a liquid crystal cell having a first surface and a second surface opposite to the first surface, a first polarizing plate provided on the first surface and a second polarizing plate provided on the second surface, wherein the first and second polarizing plates each comprise a polarizer layer and a low moisture permeable base layer bonded to the polarizer layer, and a flexural balance between the first polarizing plate and the second polarizing plate is controlled by adjusting shrinkage force of the first polarizing plate and the second polarizing plate.

[Figure 3]

(a)

(b)

## Description

### Technical Field

The present invention relates to a liquid crystal panel and a method for manufacturing the same.

This application claims the benefit of priority based on Korean Patent Application No. 10-2017-0089485 filed on July 14, 2017 and Korean Patent Application No. 10-2018-0081996 filed on July 16, 2018, the disclosures of which are incorporated herein by reference in their entirety.

### Background Art

A liquid crystal display device is a display for visualizing polarized light due to the switching effect of the liquid crystals, which is used in various categories ranging from a small and medium-sized display such as a computer, a notebook, an electronic watch and a portable terminal to a large-sized TV.

A large number of polarizing plates that have been mass-produced and put into practical use for display devices at present are those obtained by bonding a protective film, which is optically transparent and also has mechanical strength, to both sides or one side of a polarizing film (polarizer) formed by dyeing a polyvinyl alcohol-based film with iodine or a dichroic material such as a dichroic dye and crosslinking the film with a boron compound, followed by stretching and orientation.

However, the stretched polyvinyl alcohol-based film has a problem that shrinkage deformation easily occurs under a durability condition such as high temperature and high humidity. If the polarizer is deformed, the stress affects the protective film and the liquid crystal cell to cause warpage, and as a result, there arise problems such as a change in physical properties of the polarizing plate comprising them and a light leakage phenomenon in the liquid crystal display device.

### Disclosure

### Technical Problem

It is a problem to be solved by the present invention to provide a liquid crystal panel that can adjust a flexural balance of upper/lower polarizing plates through adjustment of shrinkage force of polarizing plates and a method for manufacturing the same.

### Technical Solution

To solve the above-described problem, a liquid crystal panel is provided, which comprises a liquid crystal cell having a first surface and a second surface opposite to the first surface; a first polarizing plate provided on the first surface; and a second polarizing plate provided on the second surface, wherein the first and second polarizing plates each comprise a polarizer layer and a low moisture permeable base layer bonded to the polarizer layer, and satisfies Equation 1 below.

[Equation 1]

$$|\alpha_{MD} - \alpha_{TD}| \leq 1$$

In Equation 1, $\alpha_{MD}$ is a value determined by Equation 2 and $\alpha_{TD}$ is a value determined by Equation 3:

[Equation 2]

$\alpha_{MD}$ = (sum of absorption axial bending moments acting on each layer of the first polarizing plate)/(sum of transmission axial bending moments acting on each layer of the second polarizing plate)

[Equation 3]

$$\alpha_{TD} = \text{(sum of transmission axial bending moments acting on each layer of the first polarizing plate)/(sum of absorption axial bending moments acting on each layer of the second polarizing plate)}$$

In Equations 2 and 3, the absorption axial bending moment acting on each layer is determined by the product of the distance from the center of the liquid crystal panel to the center of the relevant layer and the absorption axial shrinkage force acting on the relevant layer, and
the transmission axial bending moment acting on each layer is determined by the product of the distance from the center of the liquid crystal panel to the center of the relevant layer and the transmission axial shrinkage force acting on the relevant layer.

Advantageous Effects

As described above, the liquid crystal panel and the method for manufacturing the same related to at least one embodiment of the present invention have the following effects.
The flexural balance of the upper/lower polarizing plates can be adjusted through the adjustment of the shrinkage force of the polarizing plate.
Furthermore, cracks of the polarizing plate can be prevented, and the light leakage phenomenon of the liquid crystal display device can be prevented.

**Brief Description of Drawings**

Figure 1 is a schematic sectional diagram showing a liquid crystal panel.

Figure 2 shows bending evaluation results of a polarizing plate.

Figure 3 is a conceptual diagram for explaining Equations 1 and 2.

**Mode for Invention**

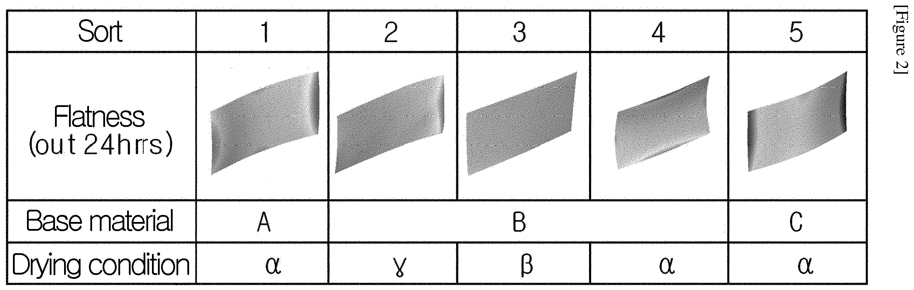

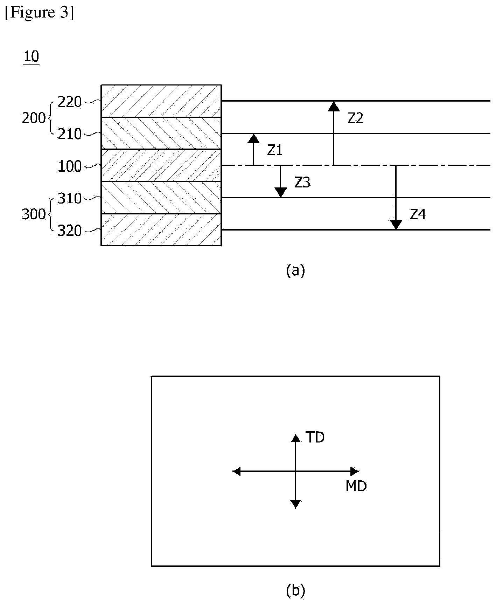

Hereinafter, a liquid crystal panel according to one embodiment of the present invention and a method for manufacturing the same will be described in detail with reference to the accompanying drawings.
In addition, the same or similar reference numerals are given to the same or corresponding components regardless of reference numerals, of which redundant explanations will be omitted, and for convenience of explanation, the size and shape of each constituent member as shown may be exaggerated or reduced.

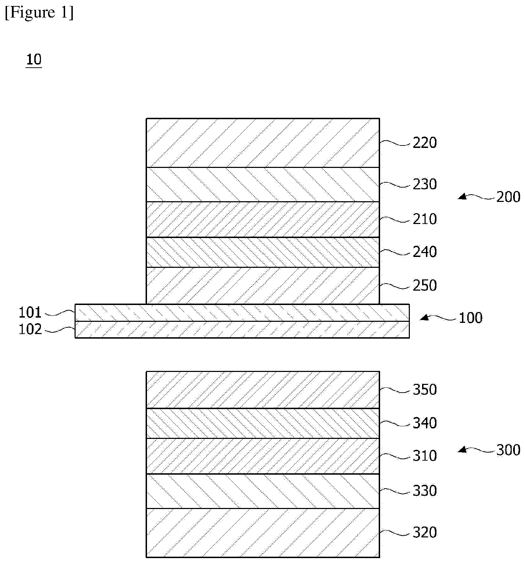

Figure 1 is a schematic sectional diagram showing a liquid crystal panel (10).
In addition, Figure 2 shows bending evaluation results of a polarizing plate, and Figure 3 is a conceptual diagram for explaining Equations 1 and 2.
Referring to Figure 1, the liquid crystal panel (10) related to one embodiment of the present invention comprises a liquid crystal cell (100) having a first surface (101) and a second surface (102) opposite to the first surface (101), a first polarizing plate (200) provided on the first surface (101) and a second polarizing plate (300) provided on the second surface (102).
Also, the first and second polarizing plates (200, 300) comprise polarizer layers (210, 310) and low moisture permeable base layers (220, 320) bonded to the polarizer layers (210, 310), respectively. In addition, in the first and second polarizing plates (200, 300), the polarizer layers (210, 310) and the low moisture permeable base layers (220, 320) may be bonded via UV adhesive layers (230, 330). When the first and second polarizing plates (200, 300) are bonded to the liquid crystal cell (100), the first and second polarizing plates (200, 300) each are bonded to the liquid crystal cell (100) such that the polarizer layers (210, 310) are adjacent to the liquid crystal cell (100) as compared with the low moisture permeable base layers (220, 320).
In this document, the MD direction represents the absorption axis direction and the TD direction represents the transmission axis direction.

Also, the first and second polarizing plates (200, 300) may comprise each a protective layer (240, 340) and an adhesive layer (250, 350). Each of the polarizing plates (200, 300) may be bonded to the liquid crystal cell (100) via the adhesive layers (250, 350). In addition, in the liquid crystal panel (10), the low moisture permeable base layers (220, 320) are located on the outside. Each of the first and second polarizing plates (200, 300) may have a thickness of 200 $\mu$m or less.

Furthermore, the polarizer layers (210, 310) may each have a first surface and a second surface opposite to the first surface. Here, the first surface represents the surface facing the liquid crystal cell (100). UV adhesive layers (230, 330) are each provided on the second surfaces of the polarizer layers (210, 310) and low moisture permeable base layers (220, 320) are provided on the UV adhesive layers (230, 330). Also, protective layers (240, 340) are each provided on the first surfaces of the polarizer layers (210, 310) and pressure-sensitive adhesive layers (250, 350) are provided on the protective layers (240, 340).

In addition, the low moisture permeable base layers (220, 320) may be formed of a resin material having transmittance of 90% or more, may have a thickness of 100$\mu$m or less, and may have moisture permeability of 50 g/m$^2$ day or less. The moisture permeability means an amount that the moisture passes through a certain external environment per unit time and unit area, which can be usually measured in an environment where the humidity difference between the inside and the outside of the film is 90% at 40°C, and the moisture permeability described herein is a result measured by a WVTR instrument (instrument name: WVTR TSY-T3) from Labthink. The instrument has a structure in which a balance is placed in a closed chamber, and the environment in the chamber is maintained at 40°C and a humidity of 10%. Furthermore, water is poured into the moisture permeable cup, and then the low moisture permeable base film is covered and fixed thereon. The humidity inside the moisture permeable cup is 100% because it is filled with water, so that the humidity difference between inside and outside of the moisture permeable cup becomes 90%. After 24 hours, the weight of the moisture permeable cup can be measured to calculate the amount of the evaporated water through the difference with the initial weight.

Furthermore, the low moisture permeable base layers (220, 320) may be formed of polyester (PET). Also, the low moisture permeable base layers (220, 320) may have TD direction shrinkage force of 3N to 10N and may have TD direction shrinkage force of more than 3N and less than 10N.

On the other hand, the shrinkage force can be measured by a DMA measuring instrument from TA Corporation. For example, the measuring instrument has no temperature acceleration condition, starts at 25°C, reaches 75°C after 3 minutes and is stabilized at 80°C after 7 minutes. The measurement time is 2 hours (120 minutes), and the value is measured 120 minutes after stabilization at 80°C. In the measurement method, a sample is clamped to the clamp, and pulled and fixed so as to maintain strain 0.1% under a preload of 0.01N, and then the shrinkage force applied upon maintaining the strain 0.1% at a high temperature is measured. The sample is made to have a width of about 5.3 mm and a length of about 15 mm, and both ends of the sample in the longitudinal direction are fixed to the clamp of the measuring instrument, and then the shrinkage force is measured. Here, the sample length of 15 mm is the length excluding the portion to be fixed to the clamp.

Referring to Figure 2 and Tables 1 and 2, the base materials A to C constitute low moisture permeable base layers, which are low moisture permeable base materials that only TD thermal shrinkage properties are different and other properties are the same. At this time, the shrinkage force is data measured at 80°C for 2 hours using the DMA measuring instrument from TA Corporation.

The polarizer layers and the low moisture permeable base layers used in Categories 1 to 5 of Table 2 and Figure 2 are as follows. In Categories 1 to 5, the polarizer layers are all the same and the low moisture permeable base layers have a difference only in the TD direction shrinkage force.

With respect to the polarizing plates (upper polarizing plate and lower polarizing plate), a PET film (MD shrinkage force: 0 to 1N, TD shrinkage force: 4 to 12N (Categories 1 to 5), thickness: 80$\mu$m) as a polarizer layer was attached to one side of a PVA polarizing film (MD shrinkage force: 8N, thickness: 17$\mu$m) as a low moisture base layer using an epoxy-based ultraviolet curable adhesive (thickness: 2 to 3 $\mu$m). Upon the attachment, the TD direction of the PET film and the MD direction (absorption axis direction) of the PVA polarizing film were attached so as to be substantially perpendicular to each other. Subsequently, a hard coating layer was formed to a thickness of about 5 to 7$\mu$m using a material containing an epoxy compound and an oxetane compound on the surface of the PVA polarizing film to which the PET film was not attached. Thereafter, an acrylic pressure-sensitive adhesive layer having a thickness of about 25$\mu$m was formed in the lower part of the hard coating layer to produce a polarizing plate.

The upper polarizing plate was attached to the upper surface of a general 32 inch LCD (liquid crystal display) panel (liquid crystal cell, thickness: about 400$\mu$m) through a pressure-sensitive adhesive layer, and the lower polarizing plate was attached to the lower surface through a pressure-sensitive adhesive layer.

Subsequently, the LCD panel was introduced into a chamber at a temperature of 60°C for 72 hours, taken out, and the panel change amounts at the elapsed time of 2 hours and the elapsed time of 24 hours were measured and summarized in Table 3 below, and the results were described in Figure 1 (flatness after 24 hours). In Table 3 below, the term flatness is a difference between the portion of the liquid crystal panel that is most bent toward the upper polarizing plate (for example, the first polarizing plate) and the portion that is most bent toward the lower polarizing plate (for example, the second polarizing plate), and this flatness can be confirmed by using a known three-dimensional measuring machine (Dukin Co., Ltd.).

[Table 1]

| Category | Base material | Drying condition | Product shrinkage force | | MD/TD | Initial | After 2 hours (Out 2 hrs) | | After 24 hours (Out 2hrs) | |
|---|---|---|---|---|---|---|---|---|---|---|
| | | | MD (N) | TD (N) | | Flatness | Fkatness | Change amount | Flatness | Change amount |
| 1 | A | α | 8 | 4 | 2 | 1.5 | -3.1 | -4.6 | -3.1 | -4.6 |
| 2 | B | γ | | 6 | 1.3 | 1.0 | -2.7 | -3.7 | -2.7 | -3.7 |
| 3 | | β | | 8 | 1 | 2.2 | 2.0 | -0.2 | 1.8 | -0.4 |
| 4 | | α | | 10 | 0.8 | 1.5 | 2.8 | 1.3 | 2.7 | 1.2 |
| 5 | C | α | | 12 | 0.6 | 2.3 | 3.2 | 0.9 | 3.1 | 0.8 |

[Table 2]

|  | Drying condition |
|---|---|
| α | X |
| β | Tg + 20°C |
| γ | Tg + 30°C |

In [Table 2], α of the drying conditions represents a case where drying is not performed, β represents a case where drying is performed at a temperature of Tg + 20°C, and γ represents a case where drying is performed at a temperature of Tg + 30°C. That is, when the low moisture permeable base layer runs in the facility, it can be dried at the above temperature to adjust the TD direction shrinkage force (transmission axial shrinkage force).

In summary, the shape of the flatness changes according to the base material having different TD thermal shrinkage properties of the low moisture permeable base layer, where it can be confirmed that the flatness is improved when the TD thermal shrinkage properties are further controlled by changing the drying temperature condition.

Also, the polarizer layers (210, 220) may have a thickness of less than 25$\mu$m, a polarization degree of 99% or more and transmittance of 40% or more, and may be formed of PVA. Furthermore, the polarizer layers (210, 220) may have MD direction shrinkage force of 5N to 9N. In addition, the polarizer layers (210, 220) may have MD direction shrinkage force of more than 5N and less than 9N. The polarizer layers (210, 220) are provided by stretching them in the MD direction, and when the MD direction shrinkage force has a value larger than the above range, there is a high possibility that heat-resistant cracks are generated.

On the other hand, the UV adhesive layers (230, 330) may have a thickness of 1$\mu$m to 4$\mu$m, and the protective layers (240, 340) may have a thickness of 3$\mu$m to 9$\mu$m.

In this document, the MD direction (absorption axis direction) represents the machine direction, the TD direction (transmission axis direction) represents the traverse direction, and the MD direction and the TD direction are orthogonal to each other.

Also, in the state where the first polarizing plate (200) and the second polarizing plate (300) are attached to both surfaces of the liquid crystal cell (100), respectively, the MD direction of the first polarizing plate (200) is the same as the TD direction of the second polarizing plate, and the TD direction of the first polarizing plate (200) is the same as the MD direction of the second polarizing plate.

Furthermore, the numbers of layers constituting the first polarizing plate (200) and the second polarizing plate (300), respectively, may be the same. For example, the first polarizing plate (200) and the second polarizing plate (300) may have the same layer structure.

Alternatively, the numbers of layers constituting the first polarizing plate (200) and the second polarizing plate (300), respectively, may be different. For example, the first polarizing plate (200) and the second polarizing plate (300) may have different layer structures. In addition, the first polarizing plate (200) and the second polarizing plate (300) may also have different thicknesses.

Referring to Figure 3, the liquid crystal panel (10) satisfies Equation 1 below.

[Equation 1]

$$|\alpha_{MD} - \alpha_{TD}| \leq 1$$

In Equation 1, $\alpha_{MD}$ is a value determined by Equation 2 and $\alpha_{TD}$ is a value determined by Equation 3:

[Equation 2]

$\alpha_{MD}$ = (sum of absorption axial bending moments acting on each layer of the first polarizing plate)/(sum of transmission axial bending moments acting on each layer of the second polarizing plate)

[Equation 3]

$$\alpha_{TD} = \text{(sum of transmission axial bending moments acting on each layer of the first polarizing plate)/(sum of absorption axial bending moments acting on each layer of the second polarizing plate)}$$

In Equations 2 and 3, the absorption axial bending moment acting on each layer is determined by the product of the distance (unit: $\mu$m) from the center of the liquid crystal panel to the center of the relevant layer and the absorption axial shrinkage force (unit: N) acting on the relevant layer.

Also, the transmission axial bending moment acting on each layer is determined by the product of the distance (unit: $\mu$m) from the center of the liquid crystal panel to the center of the relevant layer and the transmission axial shrinkage force (unit: N) acting on the relevant layer.

In this document, the center of the liquid crystal panel means the center of the total thickness of the liquid crystal cell (100), the first polarizing plate (200) and the second polarizing plate (300). For example, when the first polarizing plate (200) and the second polarizing plate (300) have the same thickness, the center of the liquid crystal panel may be the center of the liquid crystal cell, as shown in Figure 3(a). Alternatively, when the first polarizing plate (200) and the second polarizing plate (300) have different thicknesses, the center of the liquid crystal panel does not coincide with the center of the liquid crystal cell.

Furthermore, $\alpha_{MD}$ and $\alpha_{TD}$ defined by Equations 2 and 3 are each 0.8 to 0.12.

That is, with respect to each of the orthogonal directions (MD, TD), the ratios of the bending moments acting on the first polarizing plate (200) to the bending moments acting on the second polarizing plate (300) may be each 0.8 to 1.2. Accordingly, the flexural balance of the liquid crystal panel (10) can be controlled.

In addition, it is preferred that $\alpha_{MD}$ and $\alpha_{TD}$ are each 0.85 to 1.15, and it is preferred that $\alpha_{MD}$ and $\alpha_{TD}$ are each 1.

Therefore, in Equation 1 above, preferably, the value of $|\alpha_{MD} - \alpha_{TD}|$ may be 0.4 or less, and more preferably, the value of $|\alpha_{MD} - \alpha_{TD}|$ may be 0.3 or less.

Also, $\alpha_{MD}$ and $\alpha_{TD}$ can have the same value.

[Table 3]

| Category | Bending moment | | $\alpha_{MD}$ | $\alpha_{TD}$ |
|---|---|---|---|---|
| | MD | TD | | |
| Polarizer (PVA) | 1968.7 | 1332.95 | | |
| Base material 1 | 1037.9 | 1349.83 | 1.121 | 0.892 |
| Base material 2 | 1037.9 | 1834.8 | 0.949 | 1.054 |
| Base material 3 | 1037.9 | 1592.31 | 1.028 | 0.973 |
| Base material 4 | 1037.91 | 1689.31 | 0.995 | 1.005 |

Table 3 has been derived based on room temperature data at 60°C after 72 hours and when the bending moment of the polarizer layer is constant, it represents the results adjusted so that $\alpha_{MD}$ and $\alpha_{TD}$ approach 1, respectively, by controlling the TD direction bending moment of the low moisture permeable base layer (base materials 1 to 4) (see base materials 3 and 4). In particular, the corresponding data is similar to the experimental results at 80°C for 2 hours, which can be substituted for the corresponding results.

Furthermore, the liquid crystal panel may satisfy Equation 4 below.

[Equation 4]

$$(\alpha_{MD} - 1)(\alpha_{TD} - 1) \leq 0$$

By satisfying Equation 4 above, it is possible to prevent a twist risk.

In addition, the MD direction bending moment acting on each layer may be determined by the product of the distance (z1 to z4, unit: $\mu$m) from the center of the liquid crystal panel to the center of each layer and the MD direction shrinkage force (unit: N) acting on the relevant layer, and the TD bending moment acting on each layer may be determined by the product of the distance ($z_1$ to $z_4$, unit: $\mu$m) from the center of the liquid crystal panel to the center of each layer and the TD direction shrinkage force (unit: N) acting on the relevant layer.

For example, referring to Figure 3, $\alpha_{MD}$ and $\alpha_{TD}$ can be determined by Equations 5 and 6 as follows.

[82]    [Equation 5]

[83]    $\alpha_{MD}$ = (MD direction shrinkage force of the polarizer layer in the first polarizing plate*z1 + MD direction shrinkage force of the low moisture permeable layer in the first polarizing plate*z2)/(TD direction shrinkage force of the polarizer layer in the second polarizing plate*z3 + TD direction shrinkage force of the low moisture permeable base layer in the second polarizing plate*z4)

[85]    $\alpha_{TD}$ = (TD direction shrinkage force of the polarizer layer in the first polarizing plate*z1 + TD direction shrinkage force of the low moisture permeable layer in the first polarizing plate*z2)/(MD direction shrinkage force of the polarizer layer in the second polarizing plate*z3 + MD shrinkage force of the low moisture permeable base layer in the second polarizing plate*z4)

z1 may be a distance from the center of the liquid crystal panel (10) to the center of the polarizer layer (210) in the first polarizing plate (200) and z2 may be a distance from the center of the liquid crystal panel (10) to the center of the low moisture permeable base layer (220) in the first polarizing plate (200). z3 may be a distance from the center of the liquid crystal panel (10) to the center of the polarizer layer (310) in the second polarizing plate (300) and z4 may be a distance from the center of the liquid crystal panel (10) to the center of the low moisture permeable base layer (320) in the second polarizing plate. In this document, the center also means the center in the thickness direction. Thus, the distances z1 to z4 can be adjusted by adjusting the thickness of each layer. That is, if the thickness of the relevant layer increases, the distance from the center of the liquid crystal panel may increase, and if the thickness of the layer decreases, the distance from the center of the liquid crystal panel may decrease.

As examples of Equations 2 and 3, only the bending moments (shrinkage force) of the polarizer layer and the low moisture permeable base layer have been considered, but in Equations 2 and 3, the respective layers constituting the polarizing plate may be all or alternatively included.

Furthermore, the shrinkage force can be determined based on a shrinkage ratio. That is, the equation based on the shrinkage force can be replaced with the equation based on the shrinkage ratio.

In summary, in the liquid crystal panel (10) to which the first polarizing plate (upper polarizing plate) and the second polarizing plate (lower polarizing plate) are attached, respectively, as the bending moment of a specific layer of the first polarizing plate (200) and the second polarizing plate (300) is adjusted, the flexural balance can be adjusted, cracks can be prevented, and the light leakage phenomenon can be prevented. At this time, as a method of controlling a bending moment, the shrinkage force of each layer constituting the first and second polarizing plates may also be adjusted, and for example, the flexural balance can be adjusted by adjusting only the bending moments of the low moisture permeable base layers of the first and second polarizing plates. The adjustment of the bending moment of the low moisture permeable base layer can be achieved by controlling the TD direction (transmission axial) shrinkage force.

In addition, a method for manufacturing a liquid crystal panel (100) related to one embodiment of the present invention is a method for manufacturing a liquid crystal panel (100) by attaching a first polarizing plate (200) and a second polarizing plate (300) to both surfaces of a liquid crystal cell (100), respectively.

As described above, the first and second polarizing plates (200, 300) comprise polarizer layers (210, 310) and low moisture permeable base layers (220, 320) bonded to the polarizer layers, respectively.

Also, it comprises a step of producing the first and second polarizing plates so as to satisfy Equation 1 below.

[Equation 1]

$$|\alpha_{MD} - \alpha_{TD}| \leq 1$$

In Equation 1, $\alpha_{MD}$ is a value determined by Equation 2 and $\alpha_{TD}$ is a value determined by Equation 3:

[Equation 2]

$\alpha_{MD}$ = (sum of absorption axial bending moments acting on each layer of the first polarizing plate)/(sum of transmission axial bending moments acting on each layer of the second polarizing plate)

[Equation 3]

$\alpha_{TD}$ = (sum of transmission axial bending moments acting on each layer of the first polarizing plate)/(sum of absorption axial bending moments acting on each layer of the second polarizing plate)

In Equations 2 and 3, the absorption axial bending moment acting on each layer is determined by the product of the distance from the center of the liquid crystal panel to the center of the relevant layer and the absorption axial shrinkage force acting on the relevant layer, and the transmission axial bending moment acting on each layer is determined by the product of the distance from the center of the liquid crystal panel to the center of the relevant layer and the transmission axial shrinkage force acting on the relevant layer.

Furthermore, it may comprise a step of producing the first and second polarizing plates such that $\alpha_{MD}$ and $\alpha_{TD}$ defined by Equations 2 and 3 below are each 0.8 to 1.2.

In addition, it is preferred that $\alpha_{MD}$ and $\alpha_{TD}$ are each 0.85 to 1.15, and it is preferred that $\alpha_{MD}$ and $\alpha_{TD}$ are each 1.

Also, it is preferred that the step of producing the first and second polarizing plates satisfies Equation 4 below.

[Equation 4]

$$(\alpha_{MD} - 1)(\alpha_{TD} - 1) \leq 0$$

Furthermore, in the step of producing the first and second polarizing plates, the MD direction (absorption axial) shrinkage force of the polarizer layer may be adjusted so as to satisfy Equations 2 and 3, where the MD direction shrinkage force may be 5N to 9N. Preferably, the MD direction shrinkage force may be more than 5N and less than 9N.

In addition, in the step of producing the first and second polarizing plates, the TD direction (transmission axial) shrinkage force of the low moisture permeable base layer may be adjusted so as to satisfy Equations 2 and 3, where the TD direction shrinkage force may be 3N to 10N, and preferably, the TD direction shrinkage force may be more than 3N and less than 10N.

The preferred embodiments of the present invention as described above are disclosed for exemplary purpose, where those skilled in the art having ordinary knowledge for the present invention can make various corrections, modifications and additions within idea and scope of the present invention, and such a correction, modification and addition should be considered as falling within the scope of the following claims.

**Industrial Applicability**

According to the liquid crystal panel related to at least one embodiment of the present invention and the method for manufacturing the same, the flexural balance of the upper/lower polarizing plates can be adjusted, cracks of the polarizing plate can be prevented and the light leakage phenomenon of the liquid crystal display device can be prevented, by adjusting the shrinkage force of the polarizing plate.

**Claims**

1. A liquid crystal panel comprising a liquid crystal cell having a first surface and a second surface opposite to the first surface; a first polarizing plate provided on the first surface; and a second polarizing plate provided on the second surface, wherein the first and second polarizing plates each comprise a polarizer layer and a low moisture permeable base layer bonded to the polarizer layer, and satisfies Equation 1 below.

$$[\text{Equation 1}]$$

$$|\alpha_{MD} - \alpha_{TD}| \leq 1$$

wherein, $_{MD}$ is a value determined by Equation 2 and $_{TD}$ is a value determined by Equation 3:

$$[\text{Equation 2}]$$

$$\alpha_{MD} = (\text{sum of absorption axial bending moments acting on each layer of the first polarizing plate})/(\text{sum of transmission axial bending moments acting on each layer of the second polarizing plate})$$

$$[\text{Equation 3}]$$

$$\alpha_{TD} = (\text{sum of transmission axial bending moments acting on each layer of the first polarizing plate})/(\text{sum of absorption axial bending moments acting on each layer of the second polarizing plate})$$

wherein, the absorption axial bending moment acting on each layer is determined by the product of the distance from the center of the liquid crystal panel to the center of the relevant layer and the absorption axial shrinkage force acting on the relevant layer, and
the transmission axial bending moment acting on each layer is determined by the product of the distance from the center of the liquid crystal panel to the center of the relevant layer and the transmission axial shrinkage force acting on the relevant layer.

2. The liquid crystal panel according to claim 1,
   wherein $\alpha_{MD}$ and $\alpha_{TD}$ are each 0.8 to 1.2.

3. The liquid crystal panel according to claim 2,
   wherein $\alpha_{MD}$ and $\alpha_{TD}$ are each 0.85 to 1.15.

4. The liquid crystal panel according to claim 1,
   wherein $\alpha_{MD}$ and $\alpha_{TD}$ are each 1.

5. The liquid crystal panel according to claim 1,
   wherein $\alpha_{MD}$ and $\alpha_{TD}$ have the same value.

6. The liquid crystal panel according to claim 1,
   satisfying Equation 4 below:

[Equation 4]

$$(\alpha_{MD} - 1)(\alpha_{TD} - 1) \leq 0$$

7. The liquid crystal panel according to claim 1,
   wherein the shrinkage force is determined based on a shrinkage ratio.

8. The liquid crystal panel according to claim 1,
   wherein the polarizer layer has absorption axial shrinkage force of 5N to 9N when it has been kept at 80°C for 2 hours.

9. The liquid crystal panel according to claim 1,
   wherein the low moisture permeable base layer has transmission axial shrinkage force of 3N to 10N when it has been kept at 80°C for 2 hours.

10. The liquid crystal panel according to claim 1,
    wherein the polarizer layer and the low moisture permeable base layer are bonded to each other via a UV adhesive layer.

11. The liquid crystal panel according to claim 1,
    wherein the numbers of layers constituting the first polarizing plate and the second polarizing plate, respectively, are the same.

12. The liquid crystal panel according to claim 1,
    wherein the numbers of layers constituting the first polarizing plate and the second polarizing plate, respectively, are different.

13. A method for manufacturing a liquid crystal panel by attaching a first polarizing plate and a second polarizing plate to both surfaces of a liquid crystal cell, respectively,
    wherein the first and second polarizing plates each comprise a polarizer layer and a low moisture permeable base layer bonded to the polarizer layer, and
    it comprises a step of producing the first and second polarizing plates so as to satisfy Equation 1 below:

[Equation 1]

$$\left| \alpha_{MD} - \alpha_{TD} \right| \leq 1$$

wherein, $\alpha_{MD}$ is a value determined by Equation 2 and $\alpha_{TD}$ is a value determined by Equation 3:

[Equation 2]

$\alpha_{MD}$ = (sum of absorption axial bending moments acting on each layer of the first polarizing plate)/(sum of transmission axial bending moments acting on each layer of the second polarizing plate)

[Equation 3]

$\alpha_{TD}$ = (sum of transmission axial bending moments acting on each layer of the first polarizing plate)/(sum of absorption axial bending moments acting on each layer of the second polarizing plate)

wherein, the absorption axial bending moment acting on each layer is determined by the product of the distance from the center of the liquid crystal panel to the center of the relevant layer and the absorption axial shrinkage force acting on the relevant layer, and

the transmission axial bending moment acting on each layer is determined by the product of the distance from the center of the liquid crystal panel to the center of the relevant layer and the transmission axial shrinkage force acting on the relevant layer.

14. The method for manufacturing a liquid crystal panel according to claim 13,
    wherein $\alpha_{MD}$ and $\alpha_{TD}$ are each 0.8 to 1.2.

15. The method for manufacturing a liquid crystal panel according to claim 14,
    wherein $\alpha_{MD}$ and $\alpha_{TD}$ are each 0.85 to 1.15.

16. The method for manufacturing a liquid crystal panel according to claim 13,
    wherein $\alpha_{MD}$ and $\alpha_{TD}$ are each 1.

17. The method for manufacturing a liquid crystal panel according to claim 13, satisfying Equation 4 below:

[Equation 4]

$$(\alpha_{MD} - 1)(\alpha_{TD} - 1) \leq 0$$

18. The method for manufacturing a liquid crystal panel according to claim 13,
    wherein the polarizer layer has absorption axial shrinkage force of 5N to 9N when it has been kept at 80°C for 2 hours.

19. The method for manufacturing a liquid crystal panel according to claim 13,
    wherein the low moisture permeable base layer has transmission axial shrinkage force of 3N to 10N when it has been kept at 80°C for 2 hours.

[Figure 1]

<u>10</u>

[Figure 2]

| Sort | 1 | 2 | 3 | 4 | 5 |
|---|---|---|---|---|---|
| Flatness (out 24hrs) | | | | | |
| Base material | A | | B | | C |
| Drying condition | α | γ | β | α | α |

[Figure 3]

<u>10</u>

(a)

(b)

## INTERNATIONAL SEARCH REPORT

| International application No. |
| --- |
| **PCT/KR2018/008021** |

**A. CLASSIFICATION OF SUBJECT MATTER**

*G02F 1/1335(2006.01)i*

According to International Patent Classification (IPC) or to both national classification and IPC

**B. FIELDS SEARCHED**

Minimum documentation searched (classification system followed by classification symbols)
G02F 1/1335; G02B 5/30

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: liquid crystal panel, polarizing plate, polarizer, low-moisture permeability substrate layer, contractile power of absorption axis direction, contractile power of penetration axis direction

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-1701076 B1 (FUJIFILM CORPORATION) 31 January 2017<br>See paragraphs [0103]-[0155]; claims 1-8, 10-20; and figure 1. | 1-19 |
| Y | KR 10-2015-0072993 A (CHEIL INDUSTRIES INC.) 30 June 2015<br>See paragraphs [0032]-[0060], [0064], [0114]-[0115]; and figures 1-2, 4. | 1-19 |
| A | KR 10-2014-0146911 A (LG CHEM, LTD.) 29 December 2014<br>See paragraphs [0014]-[0029]; and figure 4. | 1-19 |
| A | KR 10-2016-0047899 A (DONGWOO FINE-CHEM CO., LTD.) 03 May 2016<br>See paragraphs [0075]-[0093]; claims 1-10; and figures 1-2. | 1-19 |
| A | KR 10-2015-0113666 A (DONGWOO FINE-CHEM CO., LTD.) 08 October 2015<br>See paragraphs [0091]-[0132]. | 1-19 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 OCTOBER 2018 (01.10.2018) | **02 OCTOBER 2018 (02.10.2018)** |

| Name and mailing address of the ISA/KR | Authorized officer |
| --- | --- |
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/008021**

| Patent document cited in search report | Publication date | Patent family member | Publication date |
|---|---|---|---|
| KR 10-1701076 B1 | 31/01/2017 | JP 2017-083858 A | 18/05/2017 |
| | | KR 10-2015-0055013 A | 20/05/2015 |
| | | TW 201421081 A | 01/06/2014 |
| | | US 2015-0212368 A1 | 30/07/2015 |
| | | US 9946110 B2 | 17/04/2018 |
| | | WO 2014-057949 A1 | 17/04/2014 |
| KR 10-2015-0072993 A | 30/06/2015 | KR 10-1669320 B1 | 25/10/2016 |
| KR 10-2014-0146911 A | 29/12/2014 | CN 104704405 A | 10/06/2015 |
| | | CN 104704405 B | 13/03/2018 |
| | | EP 2881772 A1 | 10/06/2015 |
| | | JP 2015-532458 A | 09/11/2015 |
| | | JP 6238469 B2 | 29/11/2017 |
| | | KR 10-1850565 B1 | 19/04/2018 |
| | | KR 10-2016-0017023 A | 15/02/2016 |
| | | KR 10-2018-0014798 A | 09/02/2018 |
| | | TW 201510561 A | 16/03/2015 |
| | | TW I546558 B | 21/08/2016 |
| | | US 0012771 B2 | 03/07/2018 |
| | | US 2015-0276992 A1 | 01/10/2015 |
| | | WO 2014-204164 A1 | 24/12/2014 |
| KR 10-2016-0047899 A | 03/05/2016 | NONE | |
| KR 10-2015-0113666 A | 08/10/2015 | NONE | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170089485

- KR 1020180081996